(19) Europäisches Patentamt / European Patent Office / Office européen des brevets

(11) **EP 2 997 334 B1**

(12) **FASCICULE DE BREVET EUROPEEN**

(45) Date de publication et mention de la délivrance du brevet:
**07.06.2017 Bulletin 2017/23**

(21) Numéro de dépôt: **14727885.7**

(22) Date de dépôt: **06.05.2014**

(51) Int Cl.:
*G01D 5/245* (2006.01)     *G01P 3/487* (2006.01)

(86) Numéro de dépôt international:
**PCT/FR2014/051059**

(87) Numéro de publication internationale:
**WO 2014/184465 (20.11.2014 Gazette 2014/47)**

(54) **CODEUR DE POSITION**

POSITIONSKODIERER

POSITION ENCODER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2013 FR 1354499**

(43) Date de publication de la demande:
**23.03.2016 Bulletin 2016/12**

(73) Titulaire: **Hutchinson
75008 Paris (FR)**

(72) Inventeurs:
• **PASQUETTE, Vincent**
  **F-49460 Montreuil Juigne (FR)**
• **BAILLY, Frédéric**
  **F-31400 Toulouse (FR)**
• **MARTIN, Paul**
  **F-31240 Saint Jean (FR)**
• **BONDU, Cédric**
  **F-49520 Noyant la Gravoyere (FR)**
• **ROBIN, Jean-Christophe**
  **F-49000 Angers (FR)**

(74) Mandataire: **Cabinet Plasseraud
66 rue de la Chaussée d'Antin
75440 Paris Cedex 09 (FR)**

(56) Documents cités:
EP-A1- 1 167 927      EP-A1- 1 418 371
EP-A2- 1 873 534      FR-A1- 2 808 325
FR-A1- 2 880 682      FR-A1- 2 930 637

EP 2 997 334 B1

## Description

La présente invention est relative à un codeur de position, notamment pour déterminer la position angulaire d'un arbre mobile en rotation.

Plus particulièrement, l'invention concerne le domaine du contrôle moteur et de la détermination précise de la position angulaire du vilebrequin. Le contrôle moteur comprend un codeur permettant de synchroniser l'injection de carburant, la gestion de l'allumage avec la position angulaire de l'arbre vilebrequin. Ceci a une grande importance pour optimiser le fonctionnement du moteur et améliorer son rendement.

Il est connu d'équiper le vilebrequin d'un dispositif de codage angulaire composé d'une roue dentée solidaire du vilebrequin et d'un capteur qui est solidaire du corps du moteur et qui détecte le passage des dents. La roue dentée comprend habituellement 60 dents réparties régulièrement (tous les 6°). Cette roue dentée comprend en outre une ou deux dents manquantes permettant de créer un repère absolu sur une révolution de la roue.

Des codeurs de position utilisant une piste magnétique comprenant des repères magnétiques répartis régulièrement et un repère singulier pour déterminer une position angulaire de référence existent également.

De tels codeurs ne délivrent aucune position angulaire avant le passage de la dent manquante ou du repère magnétique singulier devant le capteur, de sorte qu'il n'est pas possible de connaitre la position de l'arbre vilebrequin avant le premier tour de rotation.

Il est également connu, par exemple du document EP 2 244 069, d'équiper un arbre avec un codeur comprenant deux pistes magnétiques ayant un nombre de repères magnétiques différent sur la périphérie. Ce codeur comprend un capteur pour chaque piste, un détecteur qui détermine la différence de phase des signaux fournis par les deux capteurs, et un calculateur d'angle qui utilise cette différence de phase.

Cependant, au montage de tels codeurs sont difficiles à positionner angulairement, et finalement doivent être calibrés après montage pour fournir une information de position ayant une référence angulaire fiable. De plus, à cause de la mesure de différence de phase, ces codeurs sont peu précis. FR 2 880 682 divulgue un encodeur muni de deux pistes de pôles magnétiques alternés de périodes différentes et dont l'une des pistes comporte au moins un pôle singulier ayant un pas d'écartement différent des autres pôles de la piste considérée. La présente invention a pour but d'améliorer les codeurs connus de contrôle moteur, et notamment de délivrer une information de position précise en toute condition de fonctionnement (ralenti, bas régime, et haut régime).

A cet effet, un codeur de position selon l'invention comprend :

- un ensemble de codage comprenant des première et seconde pistes magnétiques munies de repères comprenant des pôles magnétiques alternés pour former un codage de position, la seconde piste comprenant un repère singulier différent des autres repères de la seconde piste, ledit ensemble de codage comprenant ainsi une zone singulière comprenant ledit repère singulier et une zone régulière ne comprenant pas ledit repère singulier, et la seconde piste étant différente de la première piste dans la zone régulière de l'ensemble de codage,
- un ensemble capteur délivrant au moins un signal permettant de déterminer la position de l'ensemble de codage par rapport à l'ensemble capteur, ledit ensemble capteur comprenant un premier capteur positionné en regard de la première piste pour délivrer un premier signal, et un second capteur positionné en regard de la seconde piste pour délivrer un second signal, et
- une unité de traitement qui effectue des opérations de traitements qui déterminent au moins des première et seconde positions de l'ensemble de codage par rapport à l'ensemble capteur, et

dans lequel l'ensemble capteur fournit des premier et second signaux de type binaire avec un état haut correspondant à un pôle magnétique et un état bas correspondant à un pôle magnétique opposé, le passage de l'état bas à l'état haut correspondant à un front de type montant et le passage de l'état haut à l'état bas correspondant à un front de type descendant, et
dans lequel :

- la première position est déterminée en comptant un nombre de repères dans le premier signal depuis une détection du repère singulier dans le second signal, et
- la seconde position est déterminée par comparaison des premier et second signaux dans la zone régulière, à partir d'une valeur de déphasage temporel entre le premier signal et le second signal, et par les étapes successives suivantes :

    a) une première étape de conversion dans laquelle on détermine un écart de longueur à partir de ladite valeur de déphasage temporel et d'un modèle d'évolution du déplacement de l'ensemble de codage par rapport à l'ensemble capteur, et
    b) une seconde étape de conversion dans laquelle on détermine la seconde position à partir dudit écart de longueur et d'une fonction prédéterminée, par :

$$X2 = f(DX).$$

Grâce à ces dispositions, le codeur de position selon l'invention délivre des informations de position qui sont redondantes. Chaque position est estimée avec une méthode différente. La position réelle peut être donc estimée de manière plus précise et robuste.

Notamment, ce codeur donne une information de position (seconde position) bien avant la révolution d'un tour complet de l'arbre. La gestion de l'injection peut ainsi être effectuée dès le démarrage. Cette seconde position est donc précise à bas régime (faible vitesse de rotation de l'arbre).

En outre, la première information de position est précise à haut régime (grande vitesse de rotation de l'arbre).

Dans divers modes de réalisation du codeur selon l'invention, on peut éventuellement avoir recours en outre à l'une et/ou à l'autre des dispositions suivantes.

Selon un aspect de l'invention, on détecte le repère singulier dans le second signal si une deuxième durée est supérieure à une première durée multipliée par un facteur k, k supérieur ou égal à un, et dans lequel :

- la première durée est une différence temporelle entre les deux derniers fonts de même type du premier signal, et
- la deuxième durée est une différence temporelle entre le dernier front du premier signal et le dernier front de même type du second signal.

Selon un aspect de l'invention, on détecte le repère singulier dans le second signal si une deuxième durée est supérieure à une première durée multipliée par un facteur k, k supérieur ou égal à un, et dans lequel :

- la première durée est une différence temporelle entre les deux derniers fonts de type différent du premier signal, et
- la deuxième durée est une différence temporelle entre le dernier front du premier signal et le dernier front de type différent du second signal.

Selon un aspect de l'invention, on détecte le repère singulier dans le second signal si on compte un nombre de fronts du premier signal égal à deux entre deux fronts successifs de types opposés du second signal.

Selon un aspect de l'invention, on détecte le repère singulier dans le second signal si on compte un nombre de fronts du premier signal égal à quatre entre deux fronts successifs de mêmes types du second signal.

Selon un aspect de l'invention, la valeur de déphasage temporel est la durée entre le dernier front du premier signal et le dernier front de même type ou de type différent du second signal, ledit type de front étant prédéterminé.

Selon un aspect de l'invention, le modèle considère que l'ensemble de codage se déplace par rapport à l'ensemble capteur à une vitesse constante, et l'écart de longueur est calculé par :

$$DX = (L\_dent/T\_dent).T\_deph$$

où

L_dent est une valeur de longueur d'un repère,
T_deph est la valeur de déphasage temporel, et
T_dent est une durée entre le dernier front du premier signal et le front précédent de même type du premier signal.

Selon un aspect de l'invention, la fonction prédéterminée est implémentée par une table enregistrée dans une mémoire de l'unité de traitement, ladite table comprenant une pluralité de lignes, chaque ligne associant une valeur d'écart de longueur à une valeur de position, et l'unité de traitement sélectionnant la ligne dont l'écart de longueur déterminé à la première étape de conversion correspond sensiblement à la valeur de longueur de ladite ligne de la table, et fournissant comme seconde position la position de ladite ligne.

Selon un aspect de l'invention, l'unité de traitement effectue en outre une opération de calibration comprenant au moins les étapes successives suivantes :

a) une première étape de conversion dans laquelle on détermine un écart de longueur à partir de ladite valeur de déphasage temporel et d'un modèle d'évolution du déplacement de l'ensemble de codage par rapport à l'ensemble capteur, et

b) une seconde étape de mémorisation dans laquelle on enregistre une table dans une mémoire de l'unité de traitement, ladite table comprenant une pluralité de lignes, chaque ligne associant ladite valeur d'écart de longueur déterminée à première étape de conversion à la première position déterminée dans les opérations de traitements.

Selon un aspect de l'invention, les opérations de traitement comprennent en outre une étape de combinaison dans laquelle on détermine une position corrigée selon les critères suivants:

- si le repère singulier n'a pas été détecté au moins une fois, la position corrigée est la seconde position, et
- si le repère singulier a été détecté au moins une fois, la position corrigée est la première ou la seconde position.

Selon un aspect de l'invention, l'unité de traitement calcule une vitesse de déplacement de l'ensemble de codage par rapport à l'ensemble capteur, et la position corrigée est la seconde position si la vitesse de déplacement devient inférieure à une première vitesse limite, et la position corrigée est la première position si la vitesse de déplacement devient supérieure à une deuxième vitesse limite, ladite deuxième vitesse limite étant supérieure à la première vitesse limite.

Selon un aspect de l'invention, les opérations de traitement comprennent en outre des étapes dans lesquelles :

- on détermine une troisième position de l'ensemble de codage par rapport à l'ensemble capteur, ladite troisième position étant déterminée par comparaison des premier et second signaux dans la zone régulière sur des portions des signaux différentes que pour la détermination de la seconde position, et
- une étape de combinaison dans laquelle on détermine une position corrigée selon les critères suivants:

    - si le repère singulier n'a pas été détecté au moins une fois, la position corrigée est la seconde position ou la troisième position, et
    - si le repère singulier a été détecté au moins une fois, la position corrigée est la position parmi la première position, la seconde position et la troisième position qui est déterminée au moins deux fois.

Selon un aspect de l'invention, les opérations de traitement comprennent en outre une étape de validation dans laquelle on détermine un état de fiabilité des première et seconde positions en calculant une valeur absolue de la différence entre la première position et la seconde position, ledit état de fiabilité étant positif si ladite valeur absolue est inférieure à une valeur prédéterminée, et l'état de fiabilité étant négatif sinon.

D'autres caractéristiques et avantages de l'invention apparaîtront au cours de la description suivante d'un de ses modes de réalisation, donné à titre d'exemple non limitatif, en regard des dessins joints.

Sur les dessins :

- la figure 1a est une vue schématique en coupe longitudinale d'un codeur de position axial du type de l'invention,
- la figure 1b est une vue schématique en coupe longitudinale d'un codeur de position radial du type de l'invention,
- la figure 2 est une vue de face des pistes de l'ensemble de codage du codeur de la figure 1 ;
- La figure 3 est une vue en développé rectiligne d'une portion de l'ensemble de codage de la figure 1 comprenant un repère singulier ;
- La figure 4a est une vue en développé rectiligne d'une portion de seconde piste du codeur de position de la figure 1, sans repère singulier (référence),
- Les figures 4b à 4f sont des vues en développé rectiligne d'une même portion de seconde piste présentant quatre variantes de seconde piste comprenant un repère singulier,
- La figure 5 présente des diagrammes temporels de premier et second signaux dans la zone régulière du codeur de position de la figure 1,
- La figure 6 présente des diagrammes temporels de premier et second signaux dans la zone singulière, et montrant une première variante de détection du repère singulier,
- La figure 7 présente des diagrammes temporels de premier et second signaux dans la zone singulière, et montrant une deuxième variante de détection du repère singulier,
- La figure 8 présente des diagrammes temporels de premier et second signaux dans la zone singulière, et montrant une troisième variante de détection du repère singulier, et
- La figure 9 présente des diagrammes temporels de premier et second signaux dans la zone régulière et montrant un signal additionnel en quadrature et la détermination d'une durée de déphasage pour déterminer la seconde position.

Sur les différentes figures les mêmes références numériques désignent des éléments identiques ou similaires.

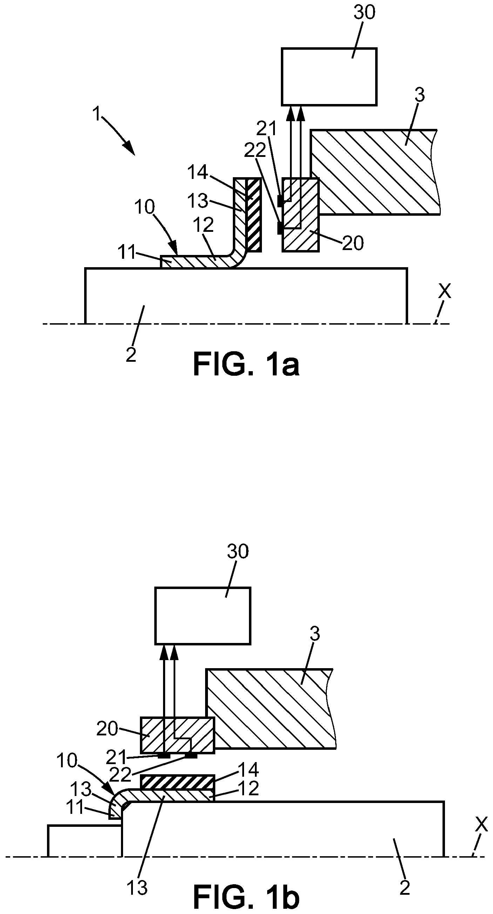

Les **figures 1a et 1b** sont des vues schématiques d'un codeur de position 1 selon deux modes de réalisation de l'invention. Ce codeur est un codeur de position angulaire adapté pour être monté entre un arbre 2 mobile en rotation autour d'un axe X, et un bâti ou carter fixe 3. L'arbre 2 peut être un vilebrequin et le carter 3 le carter d'un moteur.

Le codeur de position 1 comprend :

- un ensemble de codage 10 monté fixement sur l'arbre 2, ledit ensemble de codage comprenant des repères,
- un ensemble capteur 20 monté fixement sur le carter 3 en regard de l'ensemble de codage 10, ledit ensemble capteur comprenant des capteurs pour détecter lesdits repères et notamment leur passage devant les capteurs et pour fournir des signaux, et
- une unité de traitement 30 qui traite les signaux pour déterminer la position de l'ensemble de codage 10 (de l'arbre 2) par rapport à l'ensemble capteur 20 (carter 3).

Au montage, l'ensemble de codage 10 et l'ensemble capteur 20 sont avantageusement positionnés angulairement autour de l'axe X chacun à une position angulaire prédéterminée.

L'ensemble de codage 10 comprend par exemple un manchon 11 comprenant une portion annulaire 12 s'étendant longitudinalement selon la direction de l'axe X jusqu'à une portion radiale 13 s'étendant sensiblement perpendiculairement en s'éloignant de l'axe X. La portion annulaire 12 est emmanchée sur l'arbre 2 pour solidariser l'ensemble de codage 10 avec l'arbre.

Le codeur de position 1 peut être de type axial comme décrit ici et représenté sur la figure 1a : l'ensemble capteur 20 est positionnée dans la direction axiale par rapport à l'ensemble de codage 10, et les pistes sont coaxiales. Dans ce premier mode de réalisation, la portion radiale 13 supporte un élément de codage 14.

Le codeur de position 1 peut être de type radial comme cela est représenté en figure 1b : l'ensemble capteur 20 est positionné radialement par rapport à l'ensemble de codage, et les pistes sont annulaires les unes à côté des autres. Dans ce deuxième mode de réalisation, la portion annulaire 12 supporte l'élément de codage 14.

Cependant toute autre architecture combinant l'un et/ou l'autre des types cités ci-dessus (axial, radial) est envisageable.

L'élément de codage 14 est par exemple réalisé par surmoulage d'un matériau élastomère ou plastique contenant des particules aptes à être magnétisées. Par exemple, l'élément de codage 14 est constitué d'un matériau de type élastoferrite ou plastoferrite.

L'ensemble de codage 10 du codeur de position 1 selon l'invention comprend au moins sur ou dans son élément de codage 14 deux pistes, une première piste magnétique P1 et une seconde piste magnétique P2 toutes deux munies de repères magnétiques comprenant des pôles magnétiques alternés pour former un codage de position.

L'ensemble capteur 20 comprend un premier capteur 21 positionné en regard de la première piste P1 pour délivrer un premier signal S1, et un second capteur 22 positionné en regard de la seconde piste P2 pour délivrer un second signal S2.

Le codeur de position 1 peut être de type axial comme décrit ici et représenté sur les figures (l'ensemble capteur 20 est positionnée dans la direction axiale par rapport à l'ensemble de codage 10, et les pistes sont coaxiales), ou de type radial comme cela est également connu (l'ensemble capteur est positionné radialement par rapport à l'ensemble de codage, et les pistes sont annulaires les unes à côté des autres). Cependant toute autre architecture combinant l'un et/ou l'autre des types cités ci-dessus est envisageable.

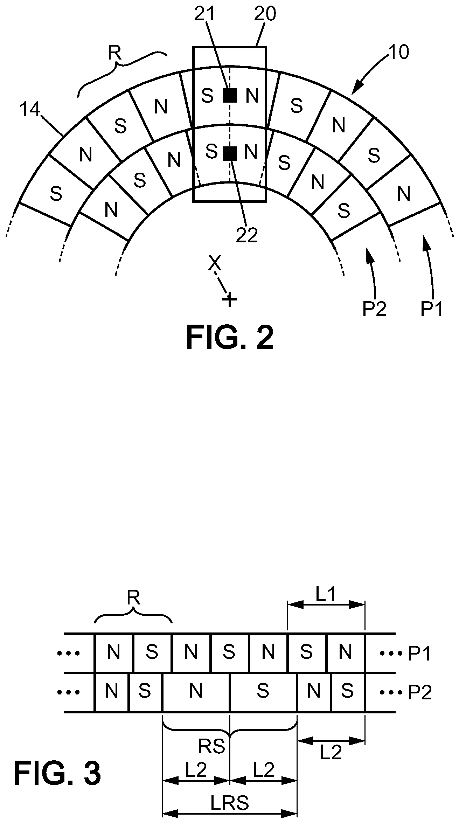

La **figure 2** montre les pistes P1 et P2 du codeur de la figure 1 (correspondant à un type axial), et donc ces pistes sont concentriques à l'axe X. Sur cette figure, les repères R de chaque piste sont représentés. Chaque repère magnétique correspond à un couple de pôles magnétiques (un pôle nord N et un pôle sud S). Les repères ou paires de pôles magnétiques sont magnétisés dans le matériau de l'élément codeur 14 tel que cela est connu en soit.

Dans les figures suivantes, les pistes seront représentées selon des portions de bandes rectilignes pour en faciliter la description, sachant que celles-ci sont circulaires dans le cas d'un codeur de type axial.

Si les pistes P1 et P2 ne contiennent que des repères magnétiques de longueur régulière, le nombre de repères magnétiques N2 de la seconde piste P2 est différent du nombre de repères magnétiques N1 de la première piste P1.

Par exemple, la seconde piste P2 a avantageusement un repère de plus que la première piste P1 : N2 = N1 + 1.

Si l'on considère des pistes rectilignes, comme représenté en **figure 3,** les repères de la première piste P1 ont une première longueur L1, et les repères de la seconde piste P2 ont une longueur L2, avec L1=L/N1, et L2=L/N2, L étant la longueur totale de la piste considérée. Cependant, si l'on considère des pistes circulaires, les relations précédentes sont à établir sur les angles des repères, l'angle total de chaque piste étant alors de 360°.

Ainsi, les repères de la seconde piste P2 se décalent régulièrement par rapport aux repères de la première piste P1 (et réciproquement). Une mesure de la position absolue est possible par mesure du déphasage entre les premier et second signaux des capteurs 21, 22.

En outre, la seconde piste P2 du codeur selon l'invention comprend un repère magnétique singulier RS différent des autres repères magnétiques de la seconde piste, ce repère singulier ayant une longueur LRS (voir figure 3).

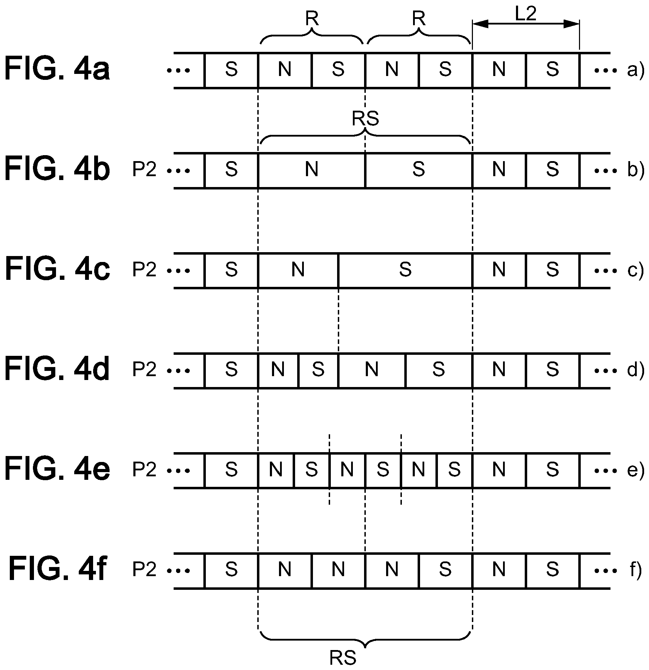

De nombreuses possibilités existent pour réaliser ce repère singulier RS. Par exemple, le repère singulier RS prend la place de deux repères réguliers R de la même piste comme cela est présenté en figure 3 et sur les **figures 4b à 4f.** La **figure 4a** correspond à une piste de référence n'ayant que des repères réguliers R. Elle permet de constater les modifications effectuées sur la seconde piste P2 pour réaliser le repère singulier.

Selon une première variante, le repère singulier RS comprend deux pôles magnétiques, répartis soit de manière symétriques (figure 4b), soit de manière asymétrique (figure 4c).

Selon une deuxième variante, le repère singulier RS comprend soit deux repères de longueurs différentes de la longueur d'un repère régulier L2 de la piste (figure 4d), soit trois repères de longueurs Le différentes de la longueur d'un repère régulier L2 de la piste (figure 4e).

Selon une troisième variante, le repère singulier RS comprend deux repères de longueurs identiques, mais un des pôles magnétiques a été inversé de polarité (figure 4f). Sur cette figure, le second pôle sud a été remplacé par un pôle nord. Cette troisième variante est équivalente à la première variante asymétrique (figure 4c), dans le cas particulier d'une asymétrie de rapport 1/4.

Dans la suite de la description, un repère singulier correspondant à celui de la figure 4f sera utilisé.

On définit que l'ensemble de codage 10 comprend une zone singulière ZS comprenant le repère magnétique singulier RS (uniquement) et une zone régulière ZR ailleurs, et ne comprenant pas le repère magnétique singulier RS.

L'ensemble de codage 10 du codeur de position 1 selon l'invention comprend en outre une unité de traitement 30 qui effectue des opérations de traitement qui déterminent au moins des première et seconde positions de l'ensemble de codage par rapport à l'ensemble de capteur, et dans lesquelles :

- la première position est déterminée en comptant un nombre de repères dans le premier signal depuis une détection du repère singulier dans le second signal, et
- la seconde position est déterminée par comparaison des premier et second signaux dans la zone régulière.

### 1 - Détection du repère singulier

La détection du repère singulier est maintenant décrite en détail.

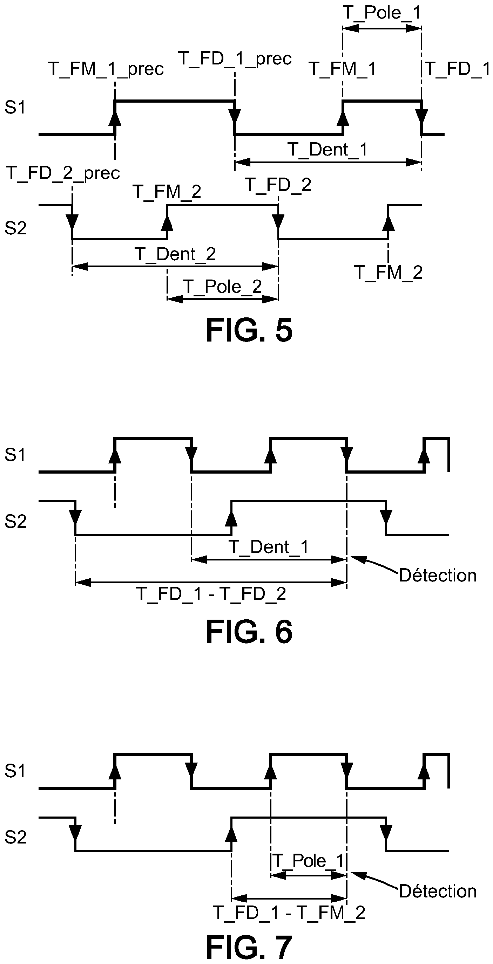

La **figure 5** montre le premier signal S1 et le second signal S2 correspondant respectivement à la première piste P1 et à la seconde piste P2. Ces signaux sont des signaux numériques avec un état bas correspondant à un pôle magnétique (e.g. Nord), et un état haut correspondant à un pôle magnétique de polarité opposée (e.g. Sud). Ces signaux présentent donc des fronts montant lors d'un passage de l'état bas à l'état haut, et des fronts descendants lors d'un passage de l'état haut à l'état bas.

L'unité de traitement 30 enregistre les instants temporels des fronts montants et descendants du premier signal et du second signal. Ainsi pour le premier signal S1, et dans l'ordre chronologique :

T_FM_1_prec est l'avant dernier front montant,
T_FD_1_prec est l'avant dernier front descendant,
T_FM_1 est le dernier front montant, et
T_FD_1 est le dernier front montant.

Des notations identiques s'appliquent au second signal S2, avec l'indice 2.

L'unité de traitement 30 peut calculer les durées de chaque repère R de chaque piste : T_Pole_1, et T_Pole_2.

T_Pole_1 est la durée du dernier pôle magnétique de la première piste P1, calculée par :

$$\texttt{T\_Pole\_1 = T\_FD\_1 - T\_FM\_1.}$$

T_pole_2 est la durée du dernier pôle magnétique de la seconde piste P2, calculée par :

$$\texttt{T\_Pole\_2 = T\_FD\_2 - T\_FM\_1.}$$

L'unité de traitement 30 peut calculer les durées de chaque repère R de chaque piste : T_Dent_1, et T_Dent_2.

T_Dent_1 est la durée du dernier repère de la première piste P1, calculée par :

$$\texttt{T\_Dent\_1 = T\_FD\_1 - T\_FD1\_prec.}$$

T_Dent_2 est la durée du dernier repère de la seconde piste P2, calculée par :

$$T\_Dent\_2 = T\_FD\_2 - T\_FD2\_prec.$$

Ensuite, le repère singulier RS de la seconde piste P2 doit être détecté.

**Selon une première variante** représentée en **figure 6,** le repère singulier RS est détecté par mesure de la durée des repères R de la première piste P1 et de la seconde piste P2.

Par exemple, la durée du dernier repère en cours de la seconde piste P2 peut être comparée à la durée du dernier repère de la première piste P1. Si elle est supérieure, le repère singulier RS est détecté sur la seconde piste P2.

Eventuellement, si elle est supérieure d'un facteur prédéterminé k, k constant et supérieur ou égal à un (par exemple égal à 1,2) le repère singulier RS est détecté sur la seconde piste P2. Une marge est ainsi ajoutée pour effectuer une détection plus robuste.

Dans le cas d'un repère singulier RS ayant la largeur de deux repères réguliers R, le facteur k est inférieur à deux, et de préférence inférieur à 1,5.

Le facteur k est réglable à toute forme de repère singulier RS pour fournir une détection robuste et optimale du repère singulier par l'unité de traitement 30.

Ainsi, le repère singulier RS de la seconde piste est détecté si :

$$T\_FD\_1 - T\_FD\_2 > k.T\_Dent\_1.$$

Une relation du même type peut être établie avec les fronts montants des premier et second signaux.

La détection est ainsi aisément généralisable par la règle suivante : on détecte le repère singulier RS dans le second signal si une deuxième durée est supérieure à une première durée multipliée par un facteur k, k supérieur ou égal à un, et dans lequel :

- la première durée est une différence temporelle entre les deux derniers fonts de même type du premier signal, et
- la deuxième durée est une différence temporelle entre le dernier front du premier signal et le dernier front de même type du second signal.

Selon une deuxième variante représentée en figure 7, le repère singulier RS de la seconde piste est détecté par mesure de la durée du pôle magnétique de la première piste P1.

Ainsi, le repère singulier RS de la seconde piste est détecté si :

$$T\_FD\_1 - T\_FM\_2 > k.T\_pole\_1.$$

Une relation du même type peut être établie en modifiant tous les types de fronts.

La détection suit la règle suivante : on détecte le repère singulier RS dans le second signal si une deuxième durée est supérieure à une première durée multipliée par un facteur k, k supérieur ou égal à un, et dans lequel :

- la première durée est une différence temporelle entre les deux derniers fonts de type différent du premier signal, et
- la deuxième durée est une différence temporelle entre le dernier front du premier signal et le dernier front de type différent du second signal.

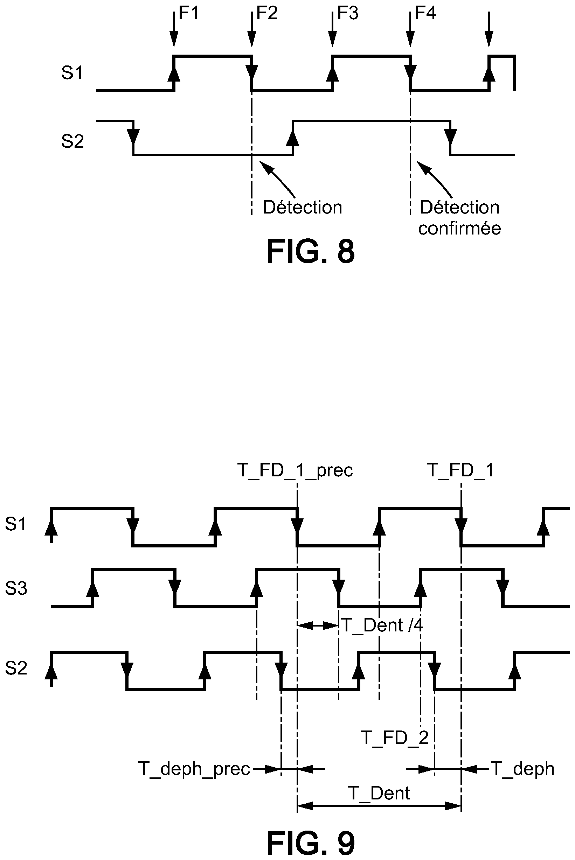

**Selon une troisième variante** représentée en **figure 8,** le repère singulier RS de la seconde piste est détecté par comptage des fronts (montant ou descendant) du premier signal S1 entre deux fronts du second signal S2.

La détection du repère singulier RS de cette deuxième variante n'est pas liée à une mesure de durée. Elle est moins sensible à des aléas sur les signaux.

Le repère singulier RS de la seconde piste S2 est détecté par exemple si deux fronts (F1, F2) du premier signal S1 sont détectés entre deux fronts successifs du second signal S2 (deux fronts de type opposés). Deux fronts sont successifs s'ils sont l'un après l'autre dans le déroulement temporel, c'est-à-dire s'ils se suivent temporellement.

Par conséquent, on détecte le repère singulier RS dans le second signal S2 si on compte un nombre de fronts du premier signal S1 égal à deux entre deux fronts successifs de types opposés du second signal S2.

En outre, le comptage peut se reproduire jusqu'au front suivant du second signal S2 pour confirmer la détection.

Le repère singulier RS de la seconde piste S2 est alors détecté si quatre fronts (F1 à F4) du premier signal S1 sont détectés entre deux fronts successifs du second signal S2 (deux fronts de même type).

Par conséquent, on détecte le repère singulier RS dans le second signal S2 si on compte un nombre de fronts du premier signal S1 égal à quatre entre deux fronts successifs de mêmes types du second signal S2.

**Selon une quatrième variante,** les deux comptages peuvent être combinés pour fournir une détection du repère singulier RS.

Le repère singulier RS de la seconde piste S2 est ainsi détecté :

- si deux fronts du premier signal S1 sont détectés entre deux fronts successifs du second signal S2, et
- si deux autres fronts du premier signal S1 sont détectés avant un front suivant du second signal S2 (un front du second signal survenant après les deux fronts successifs).

La détection du repère singulier RS de cette troisième variante est alors encore plus robuste et moins sensible à des aléas des signaux.

Les première et deuxième variantes peuvent également être combinées pour fournir une détection plus robuste. Les détections des deux variantes doivent être positives pour confirmer la présence du repère singulier RS.

Les première et troisième variantes peuvent également être combinées.

Grâce à ces méthodes, la détection du repère singulier RS est très robuste et très fiable. Cette détection devient insensible aux bruits ou aléas sur les signaux provenant des capteurs 21, 22.

## 2 - Détermination de la première position

Le repère singulier RS de la seconde piste P2 étant détecté, la première position X1 du codeur de position 1 est déterminée en comptant un nombre de fronts descendants ou montants (correspondant à un nombre de repères NR de la première piste P1 et présents dans le premier signal S1) depuis la dernière détection du repère singulier RS dans le second signal S2 (sur la seconde piste P2).

On a alors :

$$X1 = L\_Dent.NR,$$

où

L_Dent est une valeur de longueur d'un repère, et
NR est un nombre de repères détectés dans le premier signal S1 depuis la dernière détection du repère singulier RS.

L_Dent est avantageusement une valeur d'angle prédéterminée du repère dans le cas d'un codeur angulaire.

Par exemple, dans le cas d'un codeur angulaire ayant une première piste de 45 repères (ou dents) réguliers, le repère a une valeur d'angle prédéterminée égale à 8° (L_Dent = 8°).

L'ensemble capteur 20 du codeur de position 1 peut éventuellement comprendre un capteur additionnel 23 positionné avec le premier capteur 21 en regard de la première piste P1.

Ce capteur additionnel 23 délivre un signal additionnel S3 (**figure 9**). Le premier capteur 21 et le capteur additionnel 23 sont décalés d'une distance dans la direction de la première piste P1.

Ils sont avantageusement décalés d'un quart de la longueur d'un repère de la première piste, dans une direction ou la direction opposée, de sorte que le premier signal S1 et le signal additionnel S3 sont sensiblement en quadrature (déphasés de 90°) ou en quadrature inversée (déphasés de 270°) selon la sens de déplacement du l'ensemble de codage 10 par rapport à l'ensemble capteur 20 et ladite direction de décalage du capteur additionnel 23 par rapport au premier capteur 21.

Ce signal additionnel S3 combiné au premier signal S1 permet de déterminer un sens de rotation de l'ensemble de codage 10 par rapport à l'ensemble capteur 20, comme cela est connu en soit.

La combinaison du signal additionnel S3 et du premier signal S1 permet aussi d'augmenter la précision de la détermination de la première position X1. En effet, il y a alors quatre fronts montants ou descendants de ces signaux pendant la durée d'un repère de la première piste.

La première position X1 peut alors être déterminée en comptant le nombre de fronts NF du premier signal et du signal additionnel depuis la dernière détection du repère singulier dans le second signal.

On a alors :

$$X1 = L\_Fronts.NF,$$

où

L_Fronts est le quart de la valeur de longueur d'un repère L_Dent, et

NF est un nombre de fronts détectés dans le premier signal S1 et le signal additionnel S3 depuis la dernière détection du repère singulier RS.

Par exemple, dans le cas d'un codeur angulaire ayant une première piste de 45 repères (ou dents) réguliers, la précision angulaire peut être de L_Fronts = 2°.

La détermination de la première position décrite ci-dessus suppose qu'il n'y ait pas de changement de sens de déplacement (rotation) de l'ensemble de codage 10 par rapport à l'ensemble capteur 20. Si tel était le cas, l'unité de traitement peut incrémenter ou décrémenter un compteur pour déterminer la première position X1.

**3 - Détermination de la seconde position**

La seconde position X2 est déterminée par comparaison entre eux des premier et second signaux S1, S2, dans la zone régulière de l'ensemble de codage 10, c'est-à-dire en dehors de la zone de l'ensemble de codage comprenant le repère singulier RS sur la seconde piste P2.

Notamment, la seconde position X2 est déterminée à partir d'une valeur de déphasage temporel entre le premier signal S1 et le second signal S2.

Dans le cas de signaux S1, S2 de type binaires (comprenant des fronts montants et descendants), ce déphasage temporel peut être déterminé par une mesure de durée sur les signaux. L'état haut du signal binaire correspond à un pôle magnétique de la piste, l'état bas du signal binaire correspond à un pôle magnétique opposé sur la piste. Un front montant est le passage d'un état bas à un état haut, alors qu'un front descendant est le passage de l'état haut à l'état bas. Les premier et second capteurs 21, 22 comprennent chacun au moins un élément sensible au champ magnétique. Ces éléments sensibles sont souvent des éléments à effet Hall, qui mesurent une valeur analogique de ce champ magnétique. Les capteurs incluent souvent une électronique de conditionnement pour mettre en forme les signaux, par exemple pour directement fournir des signaux de type binaire. En alternative, cette interface électronique pourrait être intégrée avec l'unité de traitement des signaux.

En outre, chaque capteur 21, 22 peut comprendre deux éléments sensibles et une électronique de conditionnement qui effectue la différence des signaux analogiques fournis par lesdits éléments sensibles. Grâce à cette disposition, on réduit la dispersion de caractéristiques de ces éléments sensibles, et le système est moins sensible à une perturbation magnétique extérieure au système et qui viendrait perturber la mesure l'élément sensible.

La valeur du déphasage temporel T_deph est par exemple la durée entre le dernier front du premier signal S1 et le dernier front du même type du second signal S2. On peut également choisir que la valeur du déphasage temporel T_deph est la durée entre le dernier front du premier signal S1 et le dernier front de type oppposé du second signal S2. Les types des fronts choisis dans le premier signal et le second signal doivent seulement être déterminés à l'avance (prédéterminés).

En outre, une première valeur de déphasage temporel peut être obtenue avec un premier choix de types de fronts et une deuxième valeur de déphasage temporel peut être obtenue avec un deuxième choix de types de fronts (différent du premier choix). Grâce à cette disposition, plusieurs positions peuvent être déterminées à partir de la comparaison des premier et second signaux S1, S2.

La durée de déphasage temporel T_deph dépend de la vitesse de déplacement de l'ensemble de codage 10 par rapport à l'ensemble capteur 20, et de la longueur d'un repère de l'ensemble de codage 10.

La seconde position X2 est déterminée en deux étapes successives :

a) une première conversion qui convertit la durée de déphasage temporel T_deph en un écart de longueur DX, et

b) une seconde conversion qui convertit l'écart de longueur DX en une seconde position X2.

**3. a) Première conversion**

Selon une première variante, on considère que l'ensemble de codage 10 se déplace par rapport à l'ensemble capteur 20 à une vitesse constante entre les deux instants temporels des fronts ayant permis l'estimation du déphasage temporel.

Dans ce cas, un écart de longueur DX est déterminé par le calcul suivant :

$$DX = (L\_dent/T\_dent).T\_deph$$

où

L_dent est une valeur de longueur d'un repère,
T_dent est une durée entre le dernier front du premier signal et le front précédent de même type du premier signal, et
T_deph est une durée de déphasage temporel.

On remarque que dans la précédente formulation (L_dent / T_dent) correspond à une estimation de la vitesse instantanée V de l'ensemble de codage 10 par rapport à l'ensemble capteur 20.

Comme représenté en figure 9, la durée de déphasage T_deph est par exemple déterminée par :

$$T\_deph = T\_FD\_1 - T\_FD\_2$$

où

T_FD_1 est le dernier front descendant du premier signal S1, et
T_FD_2 est le dernier front descendant du second signal S2.

Selon une seconde variante, on considère que l'ensemble de codage 10 se déplace par rapport à l'ensemble capteur 20 avec une accélération constante entre les deux instants temporels des fronts ayant permis l'estimation du déphasage temporel.

Dans ce cas, l'écart de longueur DX est déterminé par le calcul suivant :

$$DX = L\_dent - G/2.Dt^2 - V.Dt$$

où

L_dent est une valeur de longueur d'un repère,
G est une valeur de l'accélération,
V est une valeur de la vitesse, et
Dt est un écart temporel égal à :

$$Dt = T\_dent - T\_deph,$$

et

T_dent et T_deph étant déterminé comme précédemment.

Selon une autre variante, on utilise un modèle mécanique dynamique pour estimer plus précisément les valeurs de vitesse V et d'accélération G de l'ensemble de codage 10 par rapport à l'ensemble capteur 20.

Le calcul de la première conversion décrite ci-dessus suppose qu'il n'y ait pas de changement de sens de déplacement (rotation) de l'ensemble de codage 10 par rapport à l'ensemble capteur 20. Si tel était le cas, l'unité de traitement peut par exemple remettre à zéro les mesures effectuées et attendre un ensemble de détections de fronts pendant lesquelles il n'y a pas de changement de sens du déplacement.

**3. b) Seconde conversion**

La figure 9 présente également la durée de déphasage précédente T_deph_prec, qui est différente de la dernière durée de déphasage T_deph. A vitesse constante, cette durée de déphasage est unique sur toute la longueur des pistes.

En fait, l'écart de longueur DX calculé à la première conversion permet de s'affranchir de la vitesse de déplacement. Cet écart de longueur DX est unique à chaque position de l'ensemble de codage 10 par rapport à l'ensemble capteur 20. Il suffit de déterminer une fonction f (une fonction bijective) reliant cet écart de longueur DX à la position (seconde position). Cette fonction f peut être déterminée soit de manière expérimentale, soit par calcul. La seconde position X2 peut ainsi être obtenue par application de ladite fonction f à l'écart de longueur DX résultant de la première conversion :

$$X2 = f(DX)$$

où

f est la fonction liant l'écart de longueur DX à une position de l'ensemble de codage 10 par rapport à l'ensemble capteur 20.

En variante, un offset ou décalage de longueur peut être appliqué à toute la fonction, et :

$$X2 = f(DX) + L\_dec$$

où

L_dec est une valeur prédéterminée de décalage de position (valeur constante).

Grâce à cette variante, l'ensemble de codage 10 peut être repositionné par rapport à l'ensemble capteur 20, par exemple, pour compenser un décalage de position lié au montage d'un des deux ensembles.

La fonction f peut être implémentée par une table qui fournit la seconde position X2 pour une liste prédéterminée et discrète d'écart de longueur DX. Par exemple, la seconde position X2 d'une ligne d'index i dans la table est sélectionnée si l'écart de longueur DX est compris entre celui de la ligne d'index i est celui de la ligne suivante d'index i+1 dans cette table.

Eventuellement, l'unité de traitement 30 effectuera une interpolation des données de la table (des écarts de longueur DXi de la table et des secondes positions X2i de la table associées auxdits écarts de longueur) avec l'écart de longueur DX mesuré à la première conversion pour déterminer la seconde position X2.

Enfin, la précédente table peut être définie ou calibrée grâce la première position X1.

Notamment, la première position X1 déterminée à partir du premier signal S1 et de la détection du repère singulier dans le second signal S2 peut être utilisée pour calibrer la table durant des opérations de calibration. Cette table sera alors par la suite utilisée dans les opérations de traitement du codeur de position 1 pour déterminer la seconde position X2 indépendamment de la première position X1.

L'unité de traitement 30 peut effectuer les opérations de calibration de manière périodique, et par exemple après une certaine durée prédéterminée depuis la dernière exécution des opérations de calibration.

L'unité de traitement 30 peut effectuer les opérations de calibration de manière provoquée, par exemple lorsque un état de fiabilité des première et seconde positions X1, X2 est négatif. La présente description expliquera plus loin comment déterminer cet état de fiabilité.

En outre, les opérations de calibrations peuvent être conditionnées à des conditions de fonctionnement, et notamment une plage de vitesse de déplacement de l'ensemble de codage 10 par rapport à l'ensemble capteur 20.

Enfin, la seconde position X2 peut être validée à partir d'une seconde position précédente X2_prec. La position de l'ensemble de codage 10 par rapport à l'ensemble capteur 20 évolue temporellement de manière continue, et l'écart entre deux positions successives est de l'ordre de grandeur de la valeur de longueur d'un repère L_dent. Une seconde position X2 peut donc être validée si par exemple :

$$Abs(X2 - X2\_prec) < m.L\_dent$$

avec

m coefficient constant compris entre 1 et 1,5, et de préférence inférieur à 1,2, et
abs() étant l'opérateur mathématique de valeur absolue.

**4 - Détermination d'une position corrigée par combinaison de la première position et de la seconde position**

Les informations de première position X1 et de seconde position X2 peuvent être combinées par l'unité de traitement 30 pour fournir une position corrigée XC.

Par exemple :

- si le repère singulier RS n'a pas été détecté au moins une fois (avant la fin de révolution du premier tour pour un codeur angulaire), la position corrigée XC est la seconde position X2, et
- si le repère singulier RS a été détecté au moins une fois (au moins un tour est révolu), la position corrigée est la première position X1 ou la seconde position X2.

L'unité de traitement évalue une vitesse de déplacement (V) de l'ensemble de codage 10 par rapport à l'ensemble capteur 20. Cette vitesse de déplacement peut être calculée à l'aide de la mesure de la durée d'un repère de la première piste P1, comme suit :

$$V = L\_Dent\_1 \ / \ T\_Dent\_1$$

où

L-Dent_1 est une longueur d'un repère de la première piste P1, et
T_Dent_1 est la durée du dernier repère de la première piste P1.

Cette formulation peut être mise sous forme angulaire pour un codeur angulaire.

L'unité de traitement 30 choisit avantageusement comme position corrigée XC la seconde position X2 pour une vitesse de déplacement inférieure à une vitesse limite prédéterminée (lorsque la vitesse est faible), et elle choisit la première position X1 pour une vitesse de déplacement supérieure à ladite vitesse limite prédéterminée (lorsque la vitesse est grande).

En outre, une hystérésis sur la vitesse limite prédéterminée peut être introduite pour éviter les aléas au franchissement de cette vitesse limite prédéterminée.

Ainsi, la position corrigée XC est la seconde position X2 si la vitesse de déplacement V devient inférieure à une première vitesse limite, et la position corrigée XC devient la première position X1 si la vitesse de déplacement devient supérieure à une deuxième vitesse limite, ladite deuxième vitesse limite étant supérieure à la première vitesse limite.

En alternative, la position corrigée XC est une valeur moyenne de la première position X1 et de la seconde position X2.

En outre, l'unité de traitement 30 calcule éventuellement un état de fiabilité qui représente la fiabilité des première et seconde positions X1, X2 déterminées précédemment. Par exemple, une valeur absolue de la différence entre la première position X1 et la seconde position X2 est calculée. Si cette valeur absolue est inférieure à une valeur prédéterminée, l'état de fiabilité est positif, ce qui signifie que l'une et l'autre des première et seconde positions donne une information représentative de la position réelle de l'ensemble de codage 10 par rapport à l'ensemble capteur 20. Si cette valeur absolue est supérieure ou égale à ladite valeur prédéterminée, l'état de fiabilité est négatif. Dans ce dernier cas, l'unité de traitement peut considérer que seul la première position X1 est valide (position déterminée par la position du repère singulier).

Enfin, l'unité de traitement peut déterminer une troisième position X3 de l'ensemble de codage 10 par rapport à l'ensemble capteur 20, par comparaison des premier et second signaux dans la zone régulière.

Par exemple, cette comparaison utilise des fronts de types différents que ceux utilisés pour déterminer la seconde position X2. Le traitement de la première et seconde conversion sera similaire à ce qui a été décrit ci-dessus. La seconde conversion pour cette troisième position utilisera une autre table adaptée aux choix effectués. Ainsi, des portions différentes des premier et second signaux sont utilisées pour déterminer de la troisième position X3 en comparaison des portions de ces mêmes signaux utilisés pour déterminer la seconde position X2. Les informations de première position X1, seconde position X2, et troisième position X3 sont alors utilisées dans une étape de combinaison dans laquelle on détermine une position corrigée selon les critères suivants:

- si le repère singulier n'a pas été détecté au moins une fois, la position corrigée est la seconde position ou la troisième position, et
- si le repère singulier a été détecté au moins une fois, la position corrigée est la position parmi la première position, la seconde position et la troisième position qui est déterminée au moins deux fois.

Ainsi, si deux positions parmi la première position, la seconde position et la troisième position donnent des valeurs identiques, cette dernière valeur est considérée comme correcte, et elle est la position corrigée XC.

Si les trois positions donnent des valeurs identiques, cette dernière valeur est considérée comme correcte, et elle est la position corrigée XC.

Dans les autres cas, il peut être décidé de ne pas fournir de valeur corrigée, les informations de position n'étant pas cohérentes entre elles.

## Revendications

1.  **Un codeur de position** comprenant :

    - un ensemble de codage (10) comprenant des première et seconde pistes magnétiques munies de repères comprenant des pôles magnétiques alternés pour former un codage de position, la seconde piste comprenant un repère singulier différent des autres repères de la seconde piste, ledit ensemble de codage comprenant ainsi une zone singulière comprenant ledit repère singulier et une zone régulière ne comprenant pas ledit repère singulier, et la seconde piste étant différente de la première piste dans la zone régulière de l'ensemble de codage,
    - un ensemble capteur (20) délivrant au moins un signal permettant de déterminer la position de l'ensemble de codage par rapport à l'ensemble capteur, ledit ensemble capteur comprenant un premier capteur positionné en regard de la première piste pour délivrer un premier signal, et un second capteur positionné en regard de la seconde piste pour délivrer un second signal, et
    - une unité de traitement (30) qui effectue des opérations de traitements qui déterminent au moins des première et seconde positions (X1, X2) de l'ensemble de codage par rapport à l'ensemble capteur, et

    dans lequel l'ensemble capteur (20) fournit des premier et second signaux de type binaire avec un état haut correspondant à un pôle magnétique et un état bas correspondant à un pôle magnétique opposé, le passage de l'état bas à l'état haut correspondant à un front de type montant et le passage de l'état haut à l'état bas correspondant à un front de type descendant, et
    dans lequel :

    - la première position (X1) est déterminée en comptant un nombre de repères dans le premier signal depuis une détection du repère singulier dans le second signal, et
    - la seconde position (X2) est déterminée par comparaison des premier et second signaux dans la zone régulière, à partir d'une valeur de déphasage temporel (T_deph) entre le premier signal et le second signal, et par les étapes successives suivantes :

        a) une première étape de conversion dans laquelle on détermine un écart de longueur (DX) à partir de ladite valeur de déphasage temporel (T_deph) et d'un modèle d'évolution du déplacement de l'ensemble de codage (10) par rapport à l'ensemble capteur (20), et
        b) une seconde étape de conversion dans laquelle on détermine la seconde position (X2) à partir dudit écart de longueur (DX) et d'une fonction (f) prédéterminée, par :

$$X2 = f(DX).$$

2.  Le codeur selon la revendication 1, dans lequel on détecte le repère singulier (RS) dans le second signal si une deuxième durée est supérieure à une première durée multipliée par un facteur k, k supérieur ou égal à un, et dans lequel :

    - la première durée est une différence temporelle entre les deux derniers fonts de même type du premier signal, et
    - la deuxième durée est une différence temporelle entre le dernier front du premier signal et le dernier front de même type du second signal.

3.  Le codeur selon la revendication 1, dans lequel on détecte le repère singulier (RS) dans le second signal si une deuxième durée est supérieure à une première durée multipliée par un facteur k, k supérieur ou égal à un, et dans lequel :

- la première durée est une différence temporelle entre les deux derniers fonts de type différent du premier signal, et
- la deuxième durée est une différence temporelle entre le dernier front du premier signal et le dernier front de type différent du second signal.

**4.** Le codeur selon la revendication 1, dans lequel on détecte le repère singulier dans le second signal si on compte un nombre de fronts du premier signal égal à deux entre deux fronts successifs de types opposés du second signal.

**5.** Le codeur selon la revendication 1, dans lequel on détecte le repère singulier dans le second signal si on compte un nombre de fronts du premier signal égal à quatre entre deux fronts successifs de mêmes types du second signal.

**6.** Le codeur selon la revendication 1, dans lequel la valeur de déphasage temporel (T_deph) est la durée entre le dernier front du premier signal et le dernier front de même type ou de type différent du second signal, ledit type de front étant prédéterminé.

**7.** Le codeur selon la revendication 1, dans lequel ledit modèle considère que l'ensemble de codage (10) se déplace par rapport à l'ensemble capteur (20) à une vitesse constante, et l'écart de longueur (DX) est calculé par :

$$DX = (L\_dent/T\_dent).T\_deph$$

où

L_dent est une valeur de longueur d'un repère,
T_deph est la valeur de déphasage temporel, et
T_dent est une durée entre le dernier front du premier signal et le front précédent de même type du premier signal.

**8.** Le codeur selon la revendication 1 ou la revendication 7, dans lequel la fonction (f) prédéterminée est implémentée par une table enregistrée dans une mémoire de l'unité de traitement (30), ladite table comprenant une pluralité de lignes, chaque ligne associant une valeur d'écart de longueur à une valeur de position, et l'unité de traitement (30) sélectionnant la ligne dont l'écart de longueur (DX) déterminé à la première étape de conversion correspond sensiblement à la valeur de longueur de ladite ligne de la table, et fournissant comme seconde position (X2) la position de ladite ligne.

**9.** Le codeur selon l'une des revendications 6 à 8, dans lequel l'unité de traitement (30) effectue en outre une opération de calibration comprenant au moins les étapes successives suivantes :

a) une première étape de conversion dans laquelle on détermine un écart de longueur (DX) à partir de ladite valeur de déphasage temporel (T_deph) et d'un modèle d'évolution du déplacement de l'ensemble de codage (10) par rapport à l'ensemble capteur (20), et
b) une seconde étape de mémorisation dans laquelle on enregistre une table dans une mémoire de l'unité de traitement, ladite table comprenant une pluralité de lignes, chaque ligne associant ladite valeur d'écart de longueur (DX) déterminée à première étape de conversion à la première position (X1) déterminée dans les opérations de traitements.

**10.** Le codeur selon l'une des revendications 1 à 9, dans lequel les opérations de traitement comprennent en outre une étape de combinaison dans laquelle on détermine une position corrigée selon les critères suivants:

- si le repère singulier n'a pas été détecté au moins une fois, la position corrigée est la seconde position, et
- si le repère singulier a été détecté au moins une fois, la position corrigée est la première ou la seconde position.

**11.** Le codeur selon la revendication 10, dans lequel l'unité de traitement (30) calcule une vitesse de déplacement (V) de l'ensemble de codage par rapport à l'ensemble capteur, et la position corrigée est la seconde position si la vitesse de déplacement devient inférieure à une première vitesse limite, et la position corrigée est la première position si la vitesse de déplacement devient supérieure à une deuxième vitesse limite, ladite deuxième vitesse limite étant supérieure à la première vitesse limite.

12. Le codeur selon l'une des revendications 1 à 11, dans lequel les opérations de traitement comprennent en outre des étapes dans lesquelles :

- on détermine une troisième position (X3) de l'ensemble de codage (10) par rapport à l'ensemble capteur (20), ladite troisième position étant déterminée par comparaison des premier et second signaux dans la zone régulière sur des portions des signaux différentes que pour la détermination de la seconde position (X2), et
- une étape de combinaison dans laquelle on détermine une position corrigée selon les critères suivants:

- si le repère singulier n'a pas été détecté au moins une fois, la position corrigée est la seconde position ou la troisième position, et
- si le repère singulier a été détecté au moins une fois, la position corrigée est la position parmi la première position, la seconde position et la troisième position qui est déterminée au moins deux fois.

13. Le codeur selon l'une des revendications 1 à 12, dans lequel les opérations de traitement comprennent en outre une étape de validation dans laquelle on détermine un état de fiabilité des première et seconde positions en calculant une valeur absolue de la différence entre la première position et la seconde position, ledit état de fiabilité étant positif si ladite valeur absolue est inférieure à une valeur prédéterminée, et l'état de fiabilité étant négatif sinon.

**Patentansprüche**

1. **Positionskodierer,** umfassend:

- eine Kodiereinheit (10), umfassend eine erste und zweite Magnetspur, die mit Markierungen versehen sind, umfassend abwechselnde Magnetpole zur Bildung einer Positionskodierung, wobei die zweite Spur eine einzigartige Markierung umfasst, die von den anderen Markierungen der zweiten Spur verschieden ist, wobei die Kodiereinheit so eine einzigartige Zone, welche die einzigartige Markierung umfasst, und eine reguläre Zone, welche die einzigartige Markierung nicht umfasst, umfasst, und wobei die zweite Spur von der ersten Spur in der regulären Zone der Kodiereinheit verschieden ist,
- eine Sensoreinheit (20), die mindestens ein Signal liefert, das es gestattet, die Position der Kodiereinheit in Bezug auf die Sensoreinheit zu bestimmen, wobei die Sensoreinheit einen ersten Sensor, der gegenüber der ersten Spur positioniert ist, um ein erstes Signal zu liefern, und einen zweiten Sensor, der gegenüber der zweiten Spur positioniert ist, um ein zweites Signal zu liefern, umfasst, und
- eine Verarbeitungseinheit (30), welche Verarbeitungsoperationen durchführt, die mindestens eine erste und zweite Position (X1, X2) der Kodiereinheit in Bezug auf die Sensoreinheit bestimmen, und

wobei die Sensoreinheit (20) ein erstes und zweites Signal vom binären Typ mit einem Hoch-Zustand, der einem Magnetpol entspricht, und einem Tief-Zustand, der einem entgegengesetzten Magnetpol entspricht, liefert, wobei der Übergang von dem Tief-Zustand in den Hoch-Zustand einer Kante vom ansteigenden Typ entspricht, und der Übergang von dem Hoch-Zustand in den Tief-Zustand einer Kante vom abfallenden Typ entspricht, und wobei:

- die erste Position (X1) bestimmt wird, indem eine Anzahl von Markierungen in dem ersten Signal seit einer Detektion der einzigartigen Markierung in dem zweiten Signal gezählt wird, und
- die zweite Position (X2) durch einen Vergleich des ersten und zweiten Signals in der regulären Zone bestimmt wird, aus einem Wert einer zeitlichen Phasenverschiebung (T_deph) zwischen dem ersten Signal und dem zweiten Signal, und durch die folgenden aufeinanderfolgenden Schritte:

a) einen ersten Schritt der Umwandlung, in dem eine Längenabweichung (DX) aus dem Wert der zeitlichen Phasenverschiebung (T_deph) und aus einem Entwicklungsmodell der Verschiebung der Kodiereinheit (10) in Bezug auf die Sensoreinheit (20) bestimmt wird, und
b) einen zweiten Schritt der Umwandlung, in dem die zweite Position (X2) aus der Längenabweichung (DX) und einer vorherbestimmten Funktion (f) bestimmt wird, durch:

$$X2 = f(DX).$$

**2.** Kodierer nach Anspruch 1, wobei die einzigartige Markierung (RS) in dem zweiten Signal detektiert wird, wenn eine zweite Dauer länger ist als eine erste Dauer, multipliziert mit einem Faktor k, wobei k größer oder gleich Eins ist, und wobei:

- die erste Dauer eine Zeitdifferenz zwischen den beiden letzten Kanten desselben Typs des ersten Signals ist, und
- die zweite Dauer eine Zeitdifferenz zwischen der letzten Kante des ersten Signals und der letzten Kante desselben Typs des zweiten Signals ist.

**3.** Kodierer nach Anspruch 1, wobei die einzigartige Markierung (RS) in dem zweiten Signal detektiert wird, wenn eine zweite Dauer länger ist als eine erste Dauer, multipliziert mit einem Faktor k, wobei k größer oder gleich Eins ist, und wobei:

- die erste Dauer eine Zeitdifferenz zwischen den beiden letzten Kanten eines unterschiedlichen Typs des ersten Signals ist, und
- die zweite Dauer eine Zeitdifferenz zwischen der letzten Kante des ersten Signals und der letzten Kante eines unterschiedlichen Typs des zweiten Signals ist.

**4.** Kodierer nach Anspruch 1, wobei die einzigartige Markierung in dem zweiten Signal detektiert wird, wenn eine Anzahl von Kanten des ersten Signals gleich Zwei zwischen zwei aufeinanderfolgenden Kanten entgegengesetzter Typen des zweiten Signals gezählt wird.

**5.** Kodierer nach Anspruch 1, wobei die einzigartige Markierung in dem zweiten Signal detektiert wird, wenn eine Anzahl von Kanten des ersten Signals gleich Vier zwischen zwei aufeinanderfolgenden Kanten derselben Typen des zweiten Signals gezählt wird.

**6.** Kodierer nach Anspruch 1, wobei der Wert der zeitlichen Phasenverschiebung (T_deph) die Dauer zwischen der letzten Kante des ersten Signals und der letzten Kante desselben Typs oder eines unterschiedlichen Typs des zweiten Signals ist, wobei der Typ der Kante vorbestimmt ist.

**7.** Kodierer nach Anspruch 1, wobei das Modell berücksichtigt, dass sich die Kodiereinheit (10) in Bezug auf die Sensoreinheit (20) mit einer konstanten Geschwindigkeit verschiebt, und die Längenabweichung (DX) berechnet wird durch:

$$DX = (L\_dent/T\_dent).T\_deph$$

wobei

L_dent ein Wert der Länge einer Markierung ist,
T_deph der Wert der zeitlichen Phasenverschiebung ist, und
T_dent eine Dauer zwischen der letzten Kante des ersten Signals und der vorhergehenden Kante desselben Typs des ersten Signals ist.

**8.** Kodierer nach Anspruch 1 oder Anspruch 7, wobei die vorherbestimmte Funktion (f) durch eine in einem Speicher der Verarbeitungseinheit (30) registrierte Tabelle implementiert wird, wobei die Tabelle mehrere Zeilen umfasst, wobei jede Zeile einen Wert der Längenabweichung einem Positionswert zuordnet, und wobei die Verarbeitungseinheit (30) die Zeile auswählt, deren in dem ersten Schritt der Umwandlung bestimmte Längenabweichung (DX) im Wesentlichen dem Wert der Länge der Zeile der Tabelle entspricht, und als zweite Position (X2) die Position der Zeile liefert.

**9.** Kodierer nach einem der Ansprüche 6 bis 8, wobei die Verarbeitungseinheit (30) ferner eine Kalibrierungsoperation vornimmt, die mindestens die folgenden aufeinanderfolgenden Schritte umfasst:

a) einen ersten Schritt der Umwandlung, wobei eine Längenabweichung (DX) aus dem Wert der zeitlichen Phasenverschiebung (T_deph) und aus einem Entwicklungsmodell der Verschiebung der Kodiereinheit (10) in Bezug auf die Sensoreinheit (20) bestimmt wird, und

b) einen zweiten Schritt des Speicherns, wobei eine Tabelle in einem Speicher der Verarbeitungseinheit registriert wird, wobei die Tabelle mehrere Zeilen umfasst, wobei jede Zeile den Wert der Längenabweichung (DX), die in dem ersten Schritt der Umwandlung bestimmt wird, der ersten Position (X1) zuordnet, die in den Verarbeitungsoperationen bestimmt wird.

10. Kodierer nach einem der Ansprüche 1 bis 9, wobei die Verarbeitungsoperationen ferner einen Schritt der Kombination umfassen, wobei eine korrigierte Position gemäß den folgenden Kriterien bestimmt wird:

- wenn die einzigartige Markierung nicht mindestens einmal detektiert wurde, ist die korrigierte Position die zweite Position, und
- wenn die einzigartige Markierung mindestens einmal detektiert wurde, ist die korrigierte Position die erste oder die zweite Position.

11. Kodierer nach Anspruch 10, wobei die Verarbeitungseinheit (30) eine Verschiebungsgeschwindigkeit (V) der Kodiereinheit in Bezug auf die Sensoreinheit berechnet, und die korrigierte Position die zweite Position ist, wenn die Verschiebungsgeschwindigkeit kleiner wird als eine erste Grenzgeschwindigkeit, und die korrigierte Position die erste Position ist, wenn die Verschiebungsgeschwindigkeit größer wird als eine zweite Grenzgeschwindigkeit, wobei die zweite Grenzgeschwindigkeit größer ist als die erste Grenzgeschwindigkeit.

12. Kodierer nach einem der Ansprüche 1 bis 11, wobei die Verarbeitungsoperationen ferner Schritte umfassen, in denen:

- eine dritte Position (X3) der Kodiereinheit (10) in Bezug auf die Sensoreinheit (20) bestimmt wird, wobei die dritte Position durch einen Vergleich des ersten und zweiten Signals in der regulären Zone an anderen Abschnitten der Signale als für die Bestimmung der zweiten Position (X2) bestimmt werden, und
- einen Schritt der Kombination, wobei eine korrigierte Position gemäß den folgenden Kriterien bestimmt wird:
- wenn die einzigartige Markierung nicht mindestens einmal detektiert wurde, ist die korrigierte Position die zweite Position oder die dritte Position, und
- wenn die einzigartige Markierung mindestens einmal detektiert wurde, ist die korrigierte Position die Position unter der ersten Position, der zweiten Position und der dritten Position, die mindestens zweimal bestimmt wird.

13. Kodierer nach einem der Ansprüche 1 bis 12, wobei die Verarbeitungsoperationen ferner einen Validierungsschritt umfassen, wobei ein Zuverlässigkeitsstatus der ersten und zweiten Position bestimmt wird, indem ein Absolutwert der Differenz zwischen der ersten Position und der zweiten Position berechnet wird, wobei der Zuverlässigkeitsstatus positiv ist, wenn der Absolutwert kleiner ist als ein vorherbestimmter Wert, und wenn nicht, der Zuverlässigkeitsstatus negativ ist.

## Claims

1. Position encoder, comprising:

- an encoding assembly (10) comprising first and second magnetic tracks provided with markers comprising alternating magnetic poles to form position encoding, the second track comprising a singular marker different from the other markers of the second track, said encoding assembly thereby comprising a singular zone comprising said singular marker and a regular zone not comprising said singular marker, and the second track being different from the first track in the regular zone of the encoding assembly,
- a sensor assembly (20) delivering at least one signal for determining the position of the encoding assembly with respect to the sensor assembly, said sensor assembly comprising a first sensor positioned facing the first track for delivering a first signal, and a second sensor positioned facing the second track for delivering a second signal, and
- a processing unit (30) which performs processing operations determining at least first and second positions (X1, X2) of the encoding assembly with respect to the sensor assembly, and

wherein the sensor assembly (20) supplies first and second signals of the binary type with a high state corresponding to a magnetic pole and a low state corresponding to an opposite magnetic pole, the transition from the low state to the high state corresponding to a rising type edge and the transition from the high state to the low state corresponding to a falling type edge, and
wherein:

- the first position (X1) is determined by counting the number of markers in the first signal from a detection of the singular marker in the second signal, and
- the second position (X2) is determined by comparing the first and second signals in the regular zone, on the basis of a temporal phase shift value (T_deph) between the first signal and the second signal, and by the following successive steps:

a) a first conversion step wherein a difference in length (DX) is determined on the basis of said temporal phase shift value (T_deph) and a model of progression of the movement of the encoding assembly (10) with respect to the sensor assembly (20), and
b) a second conversion step wherein the second position (X2) is determined on the basis of said difference in length (DX) and a predetermined function (f), by:

$$X2 = f(DX).$$

2. Encoder according to claim 1, wherein the singular marker (RS) is detected in the second signal if a second time is greater than a first time multiplied by a factor k, where k is greater than or equal to one, and wherein:

- the first time is a time difference between the last two edges of the same type of the first signal, and
- the second time is a time difference between the last edge of the first signal and the last edge of the same type of the second signal.

3. Encoder according to claim 1, wherein the singular marker (RS) is detected in the second signal if a second time is greater than a first time multiplied by a factor k, where k is greater than or equal to one, and wherein:

- the first time is a time difference between the last two edges of the same type of the first signal, and
- the second time is a time difference between the last edge of the first signal and the last edge of the different type of the second signal.

4. Encoder according to claim 1, wherein the singular marker is detected in the second signal if a number of edges of the first signal equal to two is counted between two successive edges of opposite types of the second signal.

5. Encoder according to claim 1, wherein the singular marker is detected in the second signal if a number of edges of the first signal equal to four is counted between two successive edges of the same types of the second signal.

6. Encoder according to claim 1, wherein the temporal phase shift value (T_deph) is the time between the last edge of the first signal and the last edge of the same type or of different type of the second signal, said edge type being predetermined.

7. Encoder according to claim 1, wherein said model considers that the encoding assembly (10) moves with respect to the sensor assembly (20) at a constant speed, and the difference in length (DX) is calculated by:

$$DX = (L\_dent/T\_dent).T\_deph$$

where

L_dent is a marker length value,
T_deph is the temporal phase shift value, and
T_dent is a time between the last edge of the first signal and the preceding edge of the same type of the first signal.

8. Encoder according to claim 1 or claim 7, wherein the predetermined function (f) is implemented by a table saved in a memory of the processing unit (30), said table comprising a plurality of rows, each row associating a length difference value with a position value, and the processing unit (30) selecting the row wherein the difference in length (DX) determined in the first conversion step corresponds substantially to the length value of said row of the table, and supplying as a second position (X2) the position of said row.

9. Encoder according to one of claims 6 to 8, wherein the processing unit (30) further performs a calibration operation comprising at least the following successive steps:

a) a first conversion step wherein a difference in length (DX) is determined on the basis of said temporal phase shift value (T_deph) and a model of progression of the movement of the encoding assembly (10) with respect to the sensor assembly (20), and
b) a second memorisation step wherein a table is saved in a memory of the processing unit, said table comprising a plurality of rows, each row associating a length difference value (DX) determined in the first conversion step with the first position (X1) determined in the processing operations.

10. Encoder according to claims 1 to 9, wherein the processing operations further comprise a combination step wherein a corrected position is determined according to the following criteria:

- if the singular marker has not been detected at least once, the corrected position is the second position, and
- if the singular marker has been detected at least once, the corrected position is the first or the second position.

11. Encoder according to claim 10, wherein the processing unit (30) computes a movement speed (V) of the encoding assembly with respect to the sensor assembly, and the corrected position is the second position if the movement speed becomes less than a first limit speed, and the corrected position is the first position if the movement speed becomes greater than a second limit speed, said second limit speed being greater than the first limit speed.

12. Encoder according to one of claims 1 to 11, wherein the processing operations further comprise steps wherein:

- a third position (X3) of the encoding assembly (10) with respect to the sensor assembly (20) is determined, said third position being determined by comparing the first and second signals in the regular zone on different signal portions than for determining the second position (X2), and
- a combination step wherein a corrected position is determined according to the following criteria:

- if the singular marker has not been detected at least once, the corrected position is the second position or the third position, and
- if the singular marker has been detected at least once, the corrected position is the position from the first position, second position or third position which is determined at least twice.

13. Encoder according to one of claims 1 to 12, wherein the processing operations further comprise a validation step wherein a reliability status of the first and second positions is determined by computing an absolute value of the difference between the first position and the second position, said reliability status being positive if said absolute value is less than a predetermined value, and the reliability status being negative otherwise.

FIG. 1a

FIG. 1b

**FIG. 2**

**FIG. 3**

FIG. 4a

FIG. 4b

FIG. 4c

FIG. 4d

FIG. 4e

FIG. 4f

FIG. 5

FIG. 6

FIG. 7

F1    F2    F3    F4

S1

S2

Détection       Détection
                confirmée

## FIG. 8

T_FD_1_prec          T_FD_1

S1

S3

T_Dent /4

S2

T_FD_2

T_deph_prec                    T_deph

T_Dent

## FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2244069 A
- FR 2880682